# EUROPEAN PATENT APPLICATION

(11) **EP 3 534 588 A1**
(43) Date of publication of application: **04.09.2019**
(21) Application number: 18159503.4
(22) Date of filing: 01.03.2018
(51) Int. Cl.: H04L 29/06, H04L 12/715

(54) **NETWORK POLICY EXCHANGING METHOD AND SYSTEM**

(71) Applicant: Nokia Technologies Oy, 02610 Espoo (FI)
(72) Inventor: PEREZ CAPARROS, David, 2018 Antwerpen (BE); LIEKENS, Werner, 2018 Antwerpen (BE)
(74) Representative: Novagraaf Technologies

(57) **Abstract**

Network policy exchanging method for exchanging a network policy between at least one network controller and at least one forwarding network element which is associated with said at least one network controller, the exchanging method comprising: providing the network policy to a distributed database; storing the network policy in the distributed database and associating with the stored network policy a policy identifier representative for a storage location within the distributed database where the network policy is stored, a controller identifier which identifies the network controller from which the network policy has originated, and an element identifier identifying the network forwarding element to which the network policy applies; and providing the stored network policy to the at least one forwarding network element based on at least one of the policy identifier, controller identifier, and element identifier associated with the stored network policy.

## Description

### Field of Invention

The field of the invention relates to a network policy exchanging method and a network policy exchanging system. Particular embodiments relate to a system and a method for exchanging network policies between at least one network controller and at least one forwarding network element.

### Background

In software-defined networking (SDN), a logically centralized entity in the control plane layer, such as a network controller, computes network policies to be enforced by forwarding network elements in the data plane layer. Such network policies may include packet forwarding policies, e.g. "drop packet", "send packet to...", etc. These network policies are then pushed to the forwarding network elements, either in a proactive or in a reactive manner, e.g. following a forwarding network element request for rules on how to handle a given data packet. Network controllers can be mapped to network elements in a master-slave configuration, meaning that when the master controller fails, the slave controller can take over the control of the forwarding network elements which are associated with the failing controller.

In current state of the art, a forwarding network element in the data plane may only get such forwarding network policies if the corresponding network controller is in an active state. If the network controller fails, the forwarding network element might request for instructions on how to handle a given data flow but will receive instruction, unless there is a preconfigured slave network controller instance. In that case, the address of the network slave controller must be known in advance by the forwarding network element. This makes that adding and/or removing one or more network controllers on-demand is a difficult task, since all forwarding network elements require changes in their configuration. In addition, master and slave network controllers must be compatible with each other such that their databases can be synchronized, which may lead to a controller vendor lock-in, e.g. when an Open Network Operating System (ONOS) controller cluster is not compatible with OpenDaylight controller.

### Summary

The object of embodiments of the present invention is to provide an improved network policy exchanging method which is more reliable and/or more flexible as compared to state of the art methods. More in particular, the object of embodiments of the present invention is to provide a network policy exchanging method and system which have a reduced failure risk and/or which prevent vendor lock-in situations.

According to a first aspect there is provided a network policy exchanging method for exchanging a network policy between at least one network controller and at least one forwarding network element which is associated with said at least one network controller, the exchanging method comprising the steps of:
- providing the network policy to a distributed database;
- storing the network policy in the distributed database and associating with the stored network policy a policy identifier representative for a storage location within the distributed database where the network policy is stored, a controller identifier which identifies the network controller from which the network policy has originated, and an element identifier identifying the network forwarding element to which the network policy applies; and
- providing the stored network policy to the at least one forwarding network element based on at least one of the policy identifier, controller identifier, and element identifier associated with the stored network policy.

Embodiments are based *inter alia* on the insight that by decoupling forwarding network elements from their associated network controller, a more resilient mechanism of network forwarding can be achieved. More in particular the forwarding network element is decoupled from its associated network controller by using a distributed database as an intermediate component between the network controller and the associated forwarding network element. At the network controller a network policy may originate comprising one or more forwarding rules which are intended for a forwarding network element which is associated with the respective network controller. The network policy is then provided to and stored in a distributed database, to which distributed database both the respective network controller and the associated forwarding network element may have access. By associating with the stored network policy a policy identifier representative for a storage location within the distributed database where the network policy is stored, a particular network policy can be easily accessed and/or retrieved and/or updated if the policy identifier is known. By associating with the stored network policy a controller identifier which identifies the network controller from which the network policy has originated, a particular network policy can be easily accessed and/or updated by a network controller having an identifier matching with the controller identifier associated with the stored network policy. By associating with the stored network policy an element identifier identifying the network forwarding element to which the network policy applies a particular network policy can be easily accessed and/or retrieved by a forwarding network element having an identifier matching with the element identifier associated with the stored network policy. With the described network policy exchanging method it is achieved that the stored network policy is always available to the forwarding network element, even when the network controller would fail or would be inactive. The described network policy exchanging method is therefore more reliable as compared to state of the art methods wherein a network controller is directly coupled to the associated forwarding network element. It is clear to the skilled person that the described network policy exchanging method can be implemented for any amount of network controllers in combination with any amount of forwarding network elements. It is further clear to the skilled person that any network controller may have one or multiple forwarding network elements associated therewith, and that any forwarding network element may have one or multiple network controllers associated therewith. By using a distributed database, which is accessible by both the network controller(s) and the forwarding network element(s), the described network policy exchanging method provides a common storage layer which can be used by heterogeneous network controllers, e.g. based on different frameworks such as ONOS, OpenDaylight, etc., to configure forwarding rules for a given forwarding network element. Such forwarding network element can then consume network policies or forwarding rules from the decentralized, distributed database independently of a current status of the associated network controller(s).

In an embodiment, the distributed database comprises a blockchain based policy repository. In this manner, by employing a decentralized network policy repository which leverages on blockchain technology, the network policy exchanging method provides a secure distributed database with a high availability for both the network controller(s) and the forwarding network element(s). In addition, the network policy exchanging method avoids the risk of encountering a single point of failure by employing a blockchain based policy repository.

In another embodiment, storing the network policy in the distributed database comprises storing the network policy in a smart contract; and associating with the stored network policy a policy identifier comprises associating with the stored network policy a smart contract identifier identifying the smart contract wherein the network policy is stored. In this manner, by employing smart contracts, the network policy exchanging method is able to increase safety and/or security of the stored network policies and/or associated identifiers in the distributed database or blockchain based policy repository. In an example embodiment a permissioned, smart contract based blockchain system, such as Hyperledger Fabric, is used wherein network controllers and/or forwarding network elements should be registered and authenticated before being able to read and/or write data from and/or to the blockchain based policy repository.

In a further embodiment, providing the network policy to a distributed database comprises:
- computing the network policy at the at least one network controller; and
- sending the network policy and the element identifier of the at least one forwarding network element which is associated with the at least one network controller to the distributed database.

In another possible embodiment, providing the stored network policy to the at least one forwarding network element comprises pushing the network policy to the at least one forwarding network element based on the element identifier.

In a further developed embodiment, providing the stored network policy to the at least one forwarding network element comprises:
- querying the distributed database for a network policy based on at least one of policy identifier, controller identifier, and element identifier; and
- sending the queried network policy to the forwarding network element in response to the querying.

In an embodiment, the network policy exchanging method further comprises the steps of:
- querying the distributed database for a policy identifier based on at least one of the controller identifier of the at least one network controller and the element identifier of the at least one forwarding network element which is associated with the at least one network controller; and
- updating the network policy based on the requested policy identifier; and according to said embodiment providing the stored network policy to the at least one forwarding network element comprises providing the updated network policy to the at least one forwarding network element.

According to another aspect, there is provided a network policy exchanging system for exchanging a network policy between at least one network controller and at least one forwarding network element which is associated with said at least one network controller, the exchanging system comprising:
- a first policy providing unit and a distributed database, wherein:
   - the first policy providing unit is configured to provide the network policy to the distributed database;
   - the first policy providing unit is configured to store the network policy in the distributed database and to associate with the stored network policy a policy identifier representative for a storage location within the distributed database where the network policy is stored, a controller identifier which identifies the network controller from which the network policy has originated, and an element identifier identifying the network forwarding element to which the network policy applies; and
- a second policy providing unit, configured to provide the stored network policy to the at least one forwarding network element based on at least one of the policy identifier, controller identifier, and element identifier associated with the stored network policy.

It will be understood by the skilled person that the features and advantages disclosed hereinabove with respect to various embodiments of the network policy exchanging method may also apply, *mutatis mutandis,* to various embodiments of the network policy exchanging system.

In an embodiment, the distributed database comprises a blockchain based policy repository.

In another embodiment, the first policy providing unit is configured to store the network policy in a smart contract in the distributed database and to associate with the stored network policy a smart contract identifier identifying the smart contract wherein the network policy is stored.

In an embodiment, the first policy providing unit is configured to:
- receive from the at least one network controller the network policy and the element identifier of the at least one forwarding network element which is associated with the at least one network controller; and
- send the received network policy and element identifier to the distributed database.

In another possible embodiment, the second policy providing unit is configured to push the network policy to the at least one forwarding network element based on the element identifier.

In a further developed embodiment, the second policy providing unit is configured to:
- query the distributed database for a network policy based on at least one of policy identifier, controller identifier, and element identifier; and
- send the queried network policy to the forwarding network element.

In an embodiment, the first policy providing unit is configured to:
- query the distributed database for a policy identifier based on at least one of the controller identifier of the at least one network controller and the element identifier of the at least one forwarding network element which is associated with the at least one network controller; and
- update the network policy based on the requested policy identifier; and according to said embodiment the second policy providing unit is configured to provide the updated network policy to the at least one forwarding network element.

According to yet another aspect, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the network policy exchanging method may also apply, *mutatis mutandis,* to embodiments of the computer program product.

According to yet another aspect, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the network policy exchanging method may also apply, *mutatis mutandis,* to embodiments of the digital storage medium.

According to yet another aspect, there is provided a device programmed to perform a method comprising the steps of any one of the methods of the method embodiments described above.

Further aspects are described by the dependent claims. The features from the dependent claims, features of any of the independent claims and any features of other dependent claims may be combined as considered appropriate to the person of ordinary skill in the art, and not only in the particular combinations as defined by the claims.

### Brief description of the figures

The accompanying drawings are used to illustrate non-limiting example embodiments of network policy exchanging methods and systems and corresponding devices. The above and other advantages of the features and objects of the described embodiment will become more apparent and the invention will be better understood from the following detailed description when read in conjunction with the accompanying drawings, in which:
Figure 1 schematically illustrates a flowchart of an embodiment of a network policy exchanging method;
Figure 2 schematically illustrates a flowchart of another embodiment of a network policy exchanging method;
Figure 3 schematically illustrates a flowchart of a further embodiment of a network policy exchanging method;
Figure 4 schematically illustrates a flowchart of yet a further embodiment of a network policy exchanging method;
Figure 5 schematically illustrates an embodiment of a network policy exchanging system;
Figures 6A and 6B schematically illustrate embodiments of a network policy exchanging system wherein the distributed database comprises a blockchain based network policy repository;
Figure 7A and 7B schematically illustrate further embodiments of a network policy exchanging system and method wherein the distributed database comprises a blockchain based network policy repository; and
Figure 8 schematically illustrates a flowchart of a further embodiment of a network policy exchanging method.

### Description of embodiments

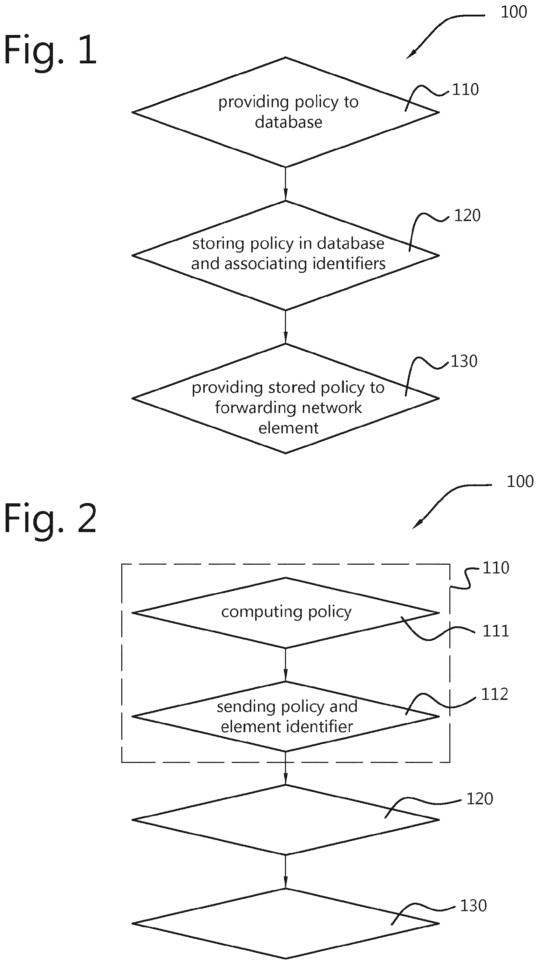

Figure 1 schematically illustrates an embodiment of a network policy exchanging method 100 for exchanging a network policy between at least one network controller and at least one forwarding network element which is associated with said at least one network controller. For the sake of simplicity, the exchanging method 100 will be described as pertaining to exchanging one network policy, which might for example comprise one or more forwarding rules, between one network controller and one forwarding network element which is associated with said network controller. However, it is clear to the skilled person that the described method may pertain to exchanging any amount of network policies. Furthermore, it is clear to the skilled person that the described network policy exchanging method 100 can be implemented for any amount of network controllers in combination with any amount of forwarding network elements. It is further clear to the skilled person that any network controller may have one or multiple forwarding network elements associated therewith, and that any forwarding network element may have one or multiple network controllers associated therewith. The network policy exchanging method 100 comprises step 110 of providing the network policy to a distributed database. The network policy may be provided to the distributed database in different manners, for example via the network controller, via a network policy database, via a dedicated component, etc. The distributed database may comprise a blockchain based policy repository.

The network policy exchanging method 100 further comprises step 120 of storing the network policy in the distributed database and associating with the stored network policy at least one identifier in the distributed database such that the stored network policy may be easily accessed, updated and/or retrieved. In the distributed database, stored network policies and/or associated identifiers thereof may be replicated and/or synchronized across peers which are part of the distributed database. Identifiers which may be allocated to or associated with the stored network policy comprise at least one of a policy identifier, representative for a storage location within the distributed database where the network policy is stored, a controller identifier, which identifies the network controller from which the network policy has originated, and an element identifier, which identifies the network forwarding element to which the network policy applies. In an embodiment, the network policy is calculated and provided by the network controller. The network controller knows for which forwarding network element the network policy is meant and can therefore provide the element identifier to the distributed database along with the network policy. Moreover, when the network controller provides the network policy to the distributed database, the controller identifier of the network controller can either be extracted therefrom or can be provided along with the network policy and/or element identifier. The policy identifier is a unique identifier or pointer which can be allocated to the respective network policy or forwarding rule(s) thereof when the network policy is stored in the distributed database. Storing the network policy in the distributed database, for example a blockchain based policy repository, may comprise storing the network policy in a smart contract. In this case, associating with the stored network policy a policy identifier comprises associating with the stored network policy a smart contract identifier identifying the smart contract wherein the network policy is stored. The network policy can then be queried the network controller and/or the forwarding network element by looking up the associated a smart contract identifier.

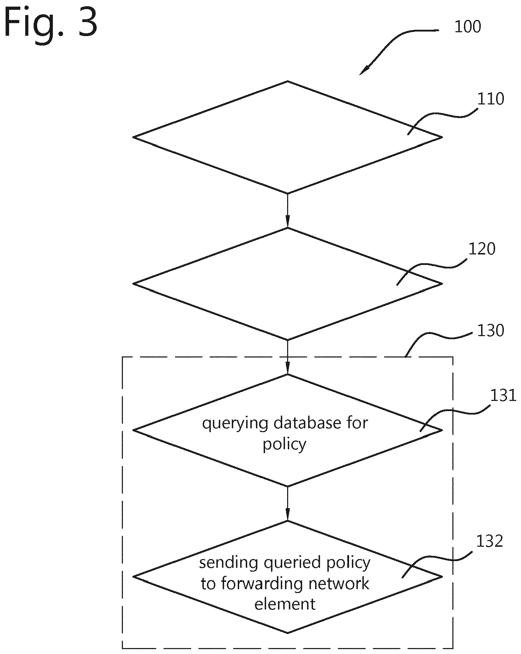

The network policy exchanging method 100 further comprises step 130 of providing the stored network policy from the distributed database to the at least one forwarding network element which is associated with the network controller based on at least one of the policy identifier, controller identifier, and element identifier associated with the stored network policy. Step 130 of providing the stored network policy to the at least one forwarding network element may comprise pushing the network policy to the at least one forwarding network element based on the element identifier. In other words, step 130 may be executed in a proactive manner. When the associated element identifier is provided by for example the network controller, the network policy may be pushed to the associated forwarding network element at any available or desirable moment in time and either be executed directly by the forwarding network element or be stored in a forwarding engine or controller agent of the forwarding network element for execution at a later moment in time. Alternatively, step 130 may be executed in a reactive manner. This is illustrated in the embodiment of figure 3 and will be further elaborated below.

Figure 2 schematically illustrates another embodiment of a network policy exchanging method 100 wherein step 130 of providing the network policy to a distributed database comprises a step 111 of computing the network policy at the at least one network controller, and step 112 of sending the network policy and the element identifier of the at least one forwarding network element which is associated with the at least one network controller to the distributed database. In this manner, the network controller is aware for which forwarding network element the network policy is calculated and can therefore provide the element identifier to the distributed database along with the network policy. Steps 120 and 130 in the embodiment of figure 2 correspond with the steps 120 and 130 in the embodiment of figure 1 and for the sake of brevity, reference is made to the description pertaining to these steps 120 and 130 as given in view of figure 1.

Figure 3 schematically illustrates a further embodiment of a network policy exchanging method 100 wherein step 130 of providing the stored network policy to the at least one forwarding network element is executed in a reactive manner. More in particular, it is illustrated that step 130 comprises querying the distributed database for a network policy based on at least one of policy identifier, controller identifier, and element identifier, and, in response to the querying, sending the queried network policy to the forwarding network element.

Steps 110 and 120 in the embodiment of figure 3 correspond with the steps 110 and 120 in the embodiments of figures 1 and 2. For the sake of brevity, reference is made to the description pertaining to these steps 110 and 120 as given in view of figures 1 and/or 2.

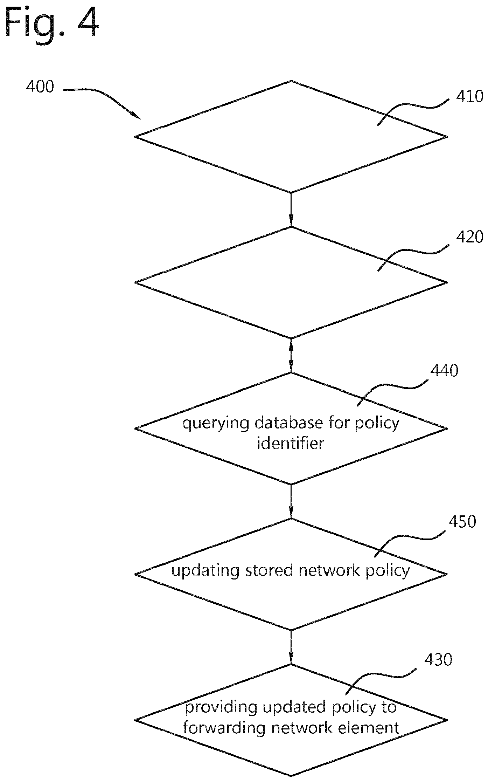

Figure 4 schematically illustrates a further embodiment of a network policy exchanging method 400. The exchanging method 400 corresponds with any one of the embodiment as illustrated in figures 1, 2 or 3, with the difference that the embodiment of figure 4 comprises addition steps. More in particular, the network policy exchanging method comprises a step 440 of querying the distributed database for a policy identifier based on at least one of the controller identifier of the at least one network controller and the element identifier of the at least one forwarding network element which is associated with the at least one network controller. As described earlier, a policy identifier, e.g. smart contract identifier, may be allocated to a stored network policy. Such a stored network policy can however still be updated, and remain at the same location in the distributed database. For example, if a network controller wants to update a previously calculated and stored network policy, the network controller may query the distributed database for the policy identifier of said stored network policy to gain access to the stored network policy. Based on the controller identifier of the network controller it may be verified that the network controller may actually gain access to the stored network policy and access may be granted to the network controller. In step 450 the network policy can then be updated. In other words, based on the controller identifier and/or the policy identifier a stored network policy can be updated. A further step 430 of providing the stored network policy to the at least one forwarding network element may comprise providing the updated network policy to the at least one forwarding network element. This can be done in a proactive or a reactive manner in a similar way as described in for step 130 in the embodiments of figure 1 and 3.

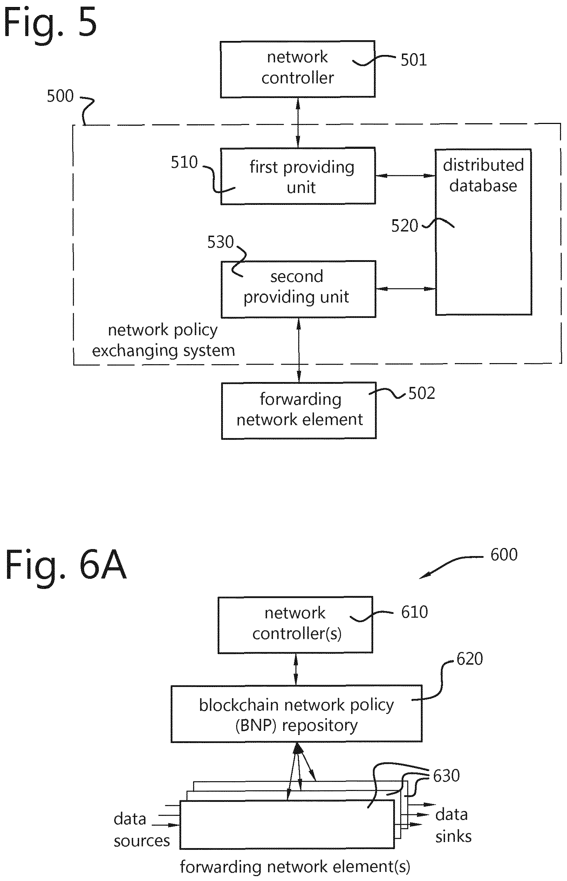

Figure 5 schematically illustrates an embodiment of a network policy exchanging system 500 for exchanging a network policy between at least one network controller 501 and at least one forwarding network element 502 which is associated with said at least one network controller. For the sake of simplicity, the exchanging system 500 will be described as pertaining to a system for exchanging one network policy, which might for example comprise one or more forwarding rules, between one network controller 501 and one forwarding network element 502 which is associated with said network controller 501. However, it is clear to the skilled person that the described system may be implemented for exchanging any amount of network policies. Furthermore, it is clear to the skilled person that the described network policy exchanging system 500 can be implemented for any amount of network controllers 501 in combination with any amount of forwarding network elements 502. It is further clear to the skilled person that any network controller 501 may have one or multiple forwarding network elements 502 associated therewith, and that any forwarding network element 502 may have one or multiple network controllers 501 associated therewith.

The exchanging system 500 comprises a first policy providing unit 510 and a distributed database 520, wherein the first policy providing unit 510 is configured to provide the network policy to the distributed database 520. In other words, the first policy providing unit 510 forms an interface which allows communication between the network controller 501 and the distributed database 520. This first policy providing unit 510 is illustrated as being a unit which is separate from both the network controller 501 and the distributed database 520, however, in embodiments the first policy providing unit 510 may be incorporated into the network controller 501 and/or the distributed database 520. The first policy providing unit 520 is configured to store the network policy in the distributed database and to associate with the stored network policy at least one identifier in the distributed database such that the stored network policy may be easily accessed, updated and/or retrieved. In the distributed database, stored network policies and/or associated identifiers thereof may be replicated and/or synchronized across peers which are part of the distributed database. Identifiers which may be allocated to or associated with the stored network policy comprise at least one of a policy identifier, representative for a storage location within the distributed database where the network policy is stored, a controller identifier, which identifies the network controller from which the network policy has originated, and an element identifier, which identifies the network forwarding element to which the network policy applies.

The exchanging system 500 further comprises a second policy providing unit 530 which is configured to provide the stored network policy to the at least one forwarding network element 502 based on at least one of the policy identifier, controller identifier, and element identifier associated with the stored network policy. In other words, the second policy providing unit 530 forms an interface which allows communication between the forwarding network element 502 and the distributed database 520. This second policy providing unit 530 is illustrated as being a unit which is separate from both the forwarding network element 502 and the distributed database 520, however, in embodiments the second policy providing unit 530 may be incorporated into the forwarding network element 502 and/or the distributed database 520.

The distributed database 520 may for example be a blockchain based policy repository and the first policy providing unit 510 may be configured to store the network policy in a smart contract. In this case, the first policy providing unit 510 may be configured to associate with the stored network policy a smart contract identifier identifying the smart contract wherein the network policy is stored. The network policy can then be queried by the network controller via the first policy providing unit 510 and/or by the forwarding network element 502 via the second policy providing unit 530 which may comprises looking up the associated smart contract identifier in the distributed database 520.

In an embodiment, the first policy providing unit 510 is configured to receive from the at least one network controller 501 the network policy and the element identifier of the at least one forwarding network element 502 which is associated with the at least one network controller 501 and to provide the received network policy and element identifier to the distributed database 520.

In an embodiment the second policy providing unit 530 is configured to push the network policy to the at least one forwarding network element 502 based on the element identifier. In other words, the second policy providing unit 530 may be configured to pro-actively provide the network policy to the forwarding element 502 when the policy providing unit 530 is aware of the according element identifier.

In addition and/or alternatively, the second policy providing unit 530 is configured to reactively provide the network policy to the forwarding element 502. More in particular the second policy providing unit 530 may be configured to query the distributed database 520 for a network policy based on at least one of policy identifier, controller identifier, and element identifier; and in response, send the queried network policy to the forwarding network element 502.

In a further embodiment, the first policy providing unit 510 is configured to: query the distributed database 520 for a policy identifier based on at least one of the controller identifier of the at least one network controller and the element identifier of the at least one forwarding network element 502 which is associated with the at least one network controller 501. The first policy providing unit 510 is further configured to update the network policy based on the requested policy identifier. The second policy providing unit 530 may then be configured to provide the updated network policy to the at least one forwarding network element 502, either in a reactive manner or in a pro-active manner.

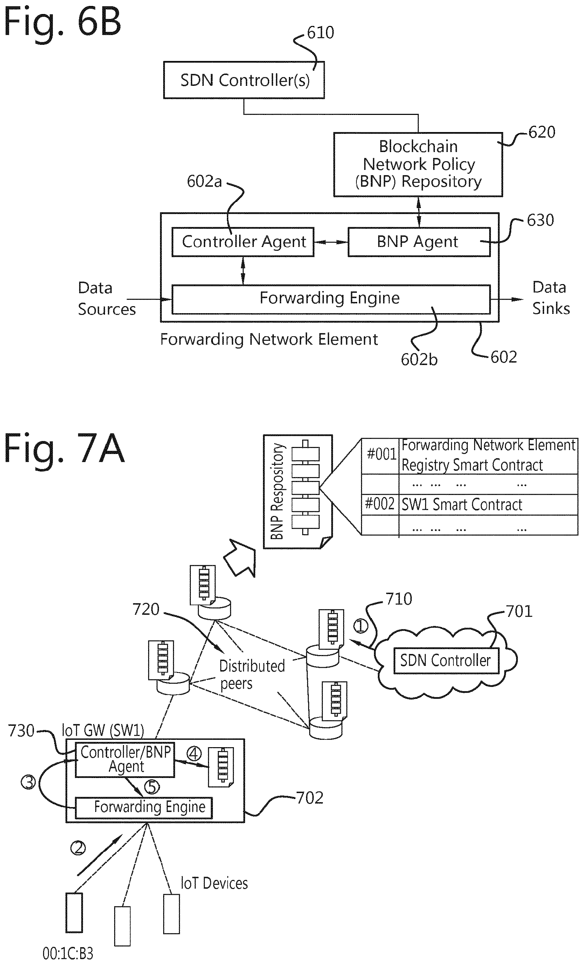

Figures 6A and 6B schematically illustrate embodiments of a network policy exchanging system 600 wherein the distributed database 620 comprises a blockchain based network policy repository.

The general aspect which is illustrated is to enable forwarding network elements 630, such as an IoT gateway, to fetch network policies from a common, decentralized and secure repository 620 based on blockchain technology, instead of directly fetching them from a centralized network controller 610. This general aspect is illustrated in figure 6A. In the schematic representation of figure 6A it is assumed that the network controller 610 comprises a first policy providing unit 510 which functions as an interface between the network controller 610 and the blockchan network policy (BNP) repository 620. In a similar way, it is assumed that each forwarding network element 630 comprises a second policy providing unit 530, which functions as an interface between the forwarding network element 630 and the BNP repository 620. It is clear to the skilled person that, alternatively, such interfacing elements 510, 530 may be provided as standalone devices or may be incorporated in the functionality of the BNP repository 620.

A further elaborated aspect is illustrated in figure 6B in which a new method and system is schematically shown which allow forwarding network elements 602 to interface with a trusted blockchain based policy repository 620 and to retrieve network policies from it. Further a new interface 510 (not shown) is assumed between a network controller 610 and a blockchain based policy repository 620 to push policies to the repository which policies will later be pulled by forwarding network elements 602. In the embodiment of figure 6B, the forwarding network element 602 is illustrated as hosting a component 630 for interfacing with the blockchain network policy (BNP) repository 620. This interfacing component 630 is referenced as BNP agent and may correspond with the second policy providing unit 530 as described in view of figure 5. This interfacing component 630 is provided in the forwarding network element 602 in addition to the controller agent component 602a and forwarding engine component 602b which are typically comprised within a forwarding network element.

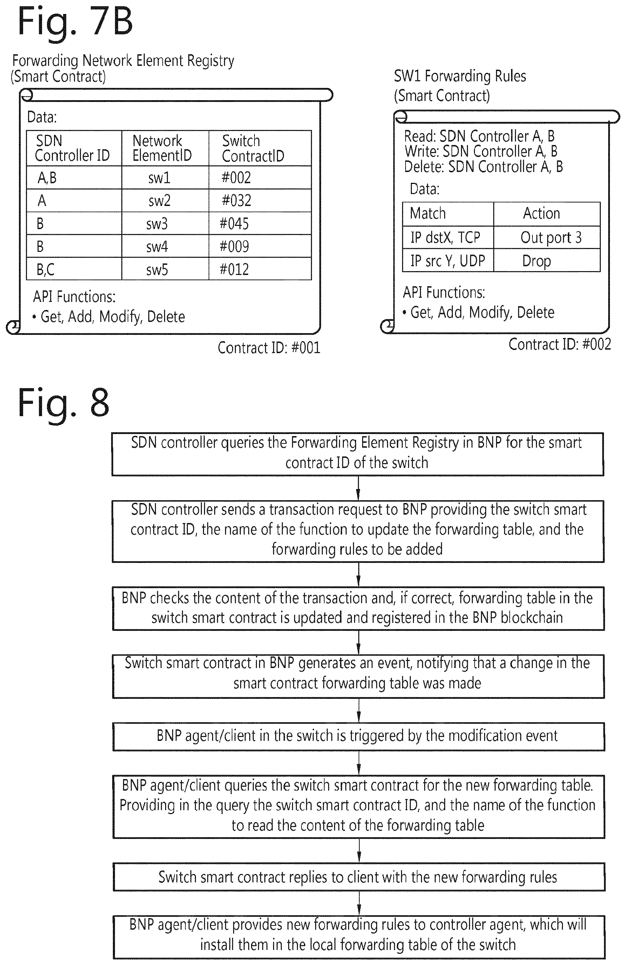

Figure 7A and 7B schematically illustrate further embodiments of a network policy exchanging system and method wherein the distributed database 720 comprises a blockchain based network policy repository 720. In one embodiment, such repository is implemented using a permissioned, smart contract enabled blockchain system (e.g. Hyperledger Fabric). In such a system, participants must be registered and authenticated before being able to write/read into/from the blockchain 720. Via a smart contract, a forwarding network element registry, with identifier #001 is implemented. The registry associates SDN network controllers 701 with forwarding network elements 702 and their respective smart contracts, with accompanying policy identifier, e.g. #002 for the smart contract related to forwarding network element SW1, that store forwarding rules. In this way, SDN controllers 701 can store in the blockchain layer, by using one or more smart contracts, forwarding rules that are addressed to forwarding network elements 702 associated to them or under their control. The forwarding network element registry, with identifier #001, and forwarding rule smart contracts, e.g. with policy identifier #002, are replicated and synchronized by means of a consensus algorithm across peers in the blockchain P2P network. Example embodiments of smart contracts are illustrated in figure 7B. In the forwarding network element registry smart contracts are stored which comprise one or more forwarding rules pertaining to multiple forwarding network elements 702. For each forwarding network element (Network Element ID), a corresponding controller identifier (SDN controller ID) indicates which network controller(s) is/are related to the respective forwarding network element and which policy/policies apply to said respective forwarding network element via a corresponding policy identifier (Switch Contract ID) which identifies the location, e.g. smart contract, where the according policy is stored in the distributed database 720. As illustrated in the "SW1 Forwarding Rules" smart contract (#002), multiple forwarding rules pertaining to the forwarding network element SW1 702 are stored, in this embodiment along with security policies regarding read/write/delete authorizations. In addition, in the illustrated embodiment further API functions are comprised within the smart contact.

In an embodiment, the forwarding network element registry defines which SDN controller(s) can access/write the forwarding rules smart contract of a given set of forwarding network element(s), by means of corresponding the appropriate controller identifier(s) and/or element identifier(s) with the respective forwarding rule(s) or smart contract(s). When deployed in the blockchain, smart contracts get a unique ID, e.g. policy/contract identifier, which is used by the BNP participants to access them. The BNP agent uses the ID or policy identifier of the smart contract associated with the SDN switch, i.e. forwarding network element 702, to pull forwarding rules from it. The smart contracts are replicated across the blockchain P2P network, so the BNP agent, i.e. second policy provider 730, does not need to address a specific peer node, it can select a given node based on network latency, for instance. This feature enables network forwarding elements 702 to be mobile and choose the closest peer node at any time to fetch network policies from.

Because of the nature of blockchain P2P networks, the BNP repository 720 is always available, the SDN controller, i.e. network controller 701, can fail without affecting the current state of the network. The proposed approach provides a much higher level of reliability than existing solutions in the state of the art where multiple network controllers need to be connected to a forwarding network element and implement a take-over procedure when the master network controller fails, which puts the forwarding element in a temporary "orphan" state.

In an additional embodiment, current SDN controller applications are replaced by a set of smart contracts in the blockchain 720 which implement the required functionality. For instance, one of such smart contracts may implement the logic to compute the shortest path in the network (Path Computation Engine) and derive the required forwarding rules for each individual network element in such path. The PCE smart contract pushes the calculated rules to the respective network element smart contracts.

In the embodiment of figure 7A a network exchanging system is illustrated, wherein the following phases are explicitly indicated:
1) SDN controller 701 registers an Internet of Things Gateway (IoT GW), SW1, in the forwarding network element registry smart contract (# 001) and updates the corresponding forwarding rules in the SW1 smart contract in the BNP repository (#002). In other words, the network controller 701 provides the distributed database 720 with its own controller identifier, and the policy identifier and/or element identifier which correspond to forwarding rules which have been stored in the distributed database 720 by the network controller 701 at an earlier moment in time.
2) IoT device SW1 is switched on and tries to establish a connection with other IoT device(s).
3) The forwarding engine of the forwarding network element SW1 702 does not contain a forwarding rule for the respective IoT device and therefore the forwarding engine notifies the Controller/BNP agent 730 which is an element combining the functionality of a conventional forwarding element controller and the functionality of an interfacing element, e.g. second policy providing unit 730 as described earlier.
4) The Controller/BNP 730 agent looks up the IoT device in the BNP repository 720 and queries and/or computes a forwarding rule based on the information provided by the network policy in the according SW1 smart contract (#002).
5) Controller/BNP agent 730 sets up a forwarding rule in the forwarding engine which enables communication between the IoT devices.

Figure 8 schematically illustrates a flowchart of a further embodiment of a network policy exchanging method which for example can be executed by the exchanging system of figures 7A and 7B. The illustrated method includes the steps of:
- SDN controller 701 querying the forwarding Element registry in the BNP repository 720 for the smart contract ID of the switch, i.e. the policy identifier corresponding to the forwarding network element 702. This step can be executed by means of a first policy providing unit 710, which provides an interface between the SDN controller 701 and the BNP repository 720;
- SDN controller 701 sending a transaction request to BNP repository 720 providing the switch smart contract ID, i.e. policy identifier, and more specifically the name of the forwarding function to update the forwarding table, and/or the forwarding rules to be added;
- BNP repository 720 checking the content of the transaction request and, if correctly authorized, the forwarding table in the switch smart contract is updated and registered in the BNP blockchain 720;
- Switch smart contract in BNP repository may pro-actively generate an event, thereby notifying that a change in the smart contract forwarding table has occurred;
- BNP agent/client, i.e. second policy providing unit, in the switch or forwarding network element being triggered by the modification event of updating the forwarding table;
- BNP agent/client querying the switch smart contract for the new forwarding table, providing in the query the switch smart contract ID, i.e. policy identifier, and the name of the function to read the content of the forwarding table;
- Switch smart contract replying to BNP agent/client by providing the new forwarding rules; and
- BNP agent/client providing the new forwarding rules to the controller agent of the switch/forwarding network element which will install them in the local forwarding table of the switch/forwarding network.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. Network policy exchanging method for exchanging a network policy between at least one network controller and at least one forwarding network element which is associated with said at least one network controller, the exchanging method comprising:
- providing the network policy to a distributed database;
- storing the network policy in the distributed database and associating with the stored network policy a policy identifier representative for a storage location within the distributed database where the network policy is stored, a controller identifier which identifies the network controller from which the network policy has originated, and an element identifier identifying the network forwarding element to which the network policy applies; and
- providing the stored network policy to the at least one forwarding network element based on at least one of the policy identifier, controller identifier, and element identifier associated with the stored network policy.

2. Network policy exchanging method according to claim 1, wherein the distributed database comprises a blockchain based policy repository.

3. Network policy exchanging method according to claim 1 or claim 2, wherein
- storing the network policy in the distributed database comprises storing the network policy in a smart contract; and
- associating with the stored network policy a policy identifier comprises associating with the stored network policy a smart contract identifier identifying the smart contract wherein the network policy is stored.

4. Network policy exchanging method according to any one of the preceding claims, wherein providing the network policy to a distributed database comprises:
- computing the network policy at the at least one network controller; and
- sending the network policy and the element identifier of the at least one forwarding network element which is associated with the at least one network controller to the distributed database.

5. Network policy exchanging method according to any one of the preceding claims, wherein providing the stored network policy to the at least one forwarding network element comprises pushing the network policy to the at least one forwarding network element based on the element identifier.

6. Network policy exchanging method according to any one of the preceding claims, wherein providing the stored network policy to the at least one forwarding network element comprises:
- querying the distributed database for a network policy based on at least one of policy identifier, controller identifier, and element identifier; and
- sending the queried network policy to the forwarding network element in response to the querying.

7. Network policy exchanging method according to any one of the preceding claims, further comprising:
- querying the distributed database for a policy identifier based on at least one of the controller identifier of the at least one network controller and the element identifier of the at least one forwarding network element which is associated with the at least one network controller; and
- updating the network policy based on the requested policy identifier; and
wherein providing the stored network policy to the at least one forwarding network element comprises providing the updated network policy to the at least one forwarding network element.

8. Network policy exchanging system for exchanging a network policy between at least one network controller and at least one forwarding network element which is associated with said at least one network controller, the exchanging system comprising:
- a first policy providing unit and a distributed database, wherein:
- the first policy providing unit is configured to provide the network policy to the distributed database;
- the first policy providing unit is configured to store the network policy in the distributed database and to associate with the stored network policy a policy identifier representative for a storage location within the distributed database where the network policy is stored, a controller identifier which identifies the network controller from which the network policy has originated, and an element identifier identifying the network forwarding element to which the network policy applies; and
- a second policy providing unit, configured to provide the stored network policy to the at least one forwarding network element based on at least one of the policy identifier, controller identifier, and element identifier associated with the stored network policy.

9. Network policy exchanging system according to claim 8, wherein the distributed database comprises a blockchain based policy repository.

10. Network policy exchanging system according to claim 8 or claim 9, wherein the first policy providing unit is configured to store the network policy in a smart contract in the distributed database and to associate with the stored network policy a smart contract identifier identifying the smart contract wherein the network policy is stored.

11. Network policy exchanging system according to any one of the preceding claims 8-10, wherein the first policy providing unit is configured to:
- receive from the at least one network controller the network policy and the element identifier of the at least one forwarding network element which is associated with the at least one network controller; and
- provide the received network policy and element identifier to the distributed database.

12. Network policy exchanging system according to any one of the preceding claims 8-11, wherein the second policy providing unit is configured to push the network policy to the at least one forwarding network element based on the element identifier.

13. Network policy exchanging system according to any one of the preceding claims 8-12, wherein the second policy providing unit is configured to:
- query the distributed database for a network policy based on at least one of policy identifier, controller identifier, and element identifier; and
- send the queried network policy to the forwarding network element.

14. Network policy exchanging system according to any one of the preceding claims 8-13, wherein the first policy providing unit is configured to:
- query the distributed database for a policy identifier based on at least one of the controller identifier of the at least one network controller and the element identifier of the at least one forwarding network element which is associated with the at least one network controller; and
- update the network policy based on the requested policy identifier; and
wherein the second policy providing unit is configured to provide the updated network policy to the at least one forwarding network element.

15. A computer program product comprising a computer-executable program of instructions for performing, when executed on a computer, the steps of the method according to any one of claims 1-7.
